# EUROPÄISCHE PATENTSCHRIFT

(11) **EP 2 930 007 B1**
(45) Veröffentlichungstag und Bekanntmachung des Hinweises auf die Patenterteilung: **28.03.2018**
(21) Anmeldenummer: 14164340.3
(22) Anmeldetag: 11.04.2014
(51) Int. Cl.: B29C 65/10, B29C 65/14

(54) **Verfahren zur Herstellung von thermoplastischen Schaumstoffplatten mittels warmer Luft**
Method for the production of thermoplastic foam panels using hot air
Procédé de fabrication de plaques en mousse thermoplastique au moyen d'air chaud

(43) Veröffentlichungstag der Anmeldung: 14.10.2015
(73) Patentinhaber: BASF SE, 67056 Ludwigshafen am Rhein (DE)
(72) Erfinder: Scherzer, Dietrich, 67433 Neustadt (DE); Neufeld, Eckhard, 67117 Limburgerhof (DE); Merkel, Peter, 67308 Zellertal (DE); Sandner, Carsten, 67098 Bad Dürkheim (DE); Schall, Herbert, 67354 Römerberg (DE); Dietzen, Franz-Josef, 67454 Haßloch (DE); Diehlmann, Tim, 67283 Obrigheim-Colgenstein (DE); Daiß, Andreas, 67061 Ludwigshafen (DE); Gehde, Michael, 09127 Chemnitz Adelsdorf (DE)

(56) Entgegenhaltungen:
- EP-A1- 0 922 559
- EP-A1- 2 578 381
- WO-A1-2014/057135
- DE-A1-102004 056 546

## Beschreibung

Die vorliegende Erfindung betrifft ein Verfahren zur Herstellung von zumindest zweilagigen thermoplastischen Schaumstoffplatten durch thermisches Verschweißen von mindestens zwei dünneren thermoplastischen Schaumstoffplatten, wobei zwischen die zwei dünneren thermoplastischen Schaumstoffplatten warme Luft geleitet wird. Bei dem erfindungsgemäßen Verfahren wird mindestens ein Heizelement parallel zu den beiden dünneren thermoplastischen Schaumstoffplatten zwischen die zu verschweißenden Oberflächen der dünneren thermoplastischen Schaumstoffplatten geführt, wobei sich die Schaumstoffplatten und das Heizelement nicht gegenseitig berühren. Gleichzeitig wird warme Luft zwischen die beiden dünneren thermoplastischen Schaumstoffplatten geleitet. Die Anzahl der Lagen der thermoplastischen Schaumstoffplatte als solcher ergibt sich aus der Anzahl der dünneren thermoplastischen Schaumstoffplatten, die miteinander thermisch verschweißt werden. Wenn beispielsweise drei dünnere thermoplastische Schaumstoffplatten miteinander thermisch verschweißt werden, wird eine dreilagige thermoplastische Schaumstoffplatte als solche erhalten, im Fall von vier dünneren thermoplastischen Schaumstoffplatten ergibt sich demzufolge eine vierlagige thermoplastische Schaumstoffplatte als solche.

EP-A 1318164 betrifft ein Verfahren zur Herstellung von dicken extrudierten Polystyrolschaumstoffplatten (XPS-Platten) durch Verbinden zweier oder mehrerer dünner Platten. Die dicken Platten werden erhalten, indem die dünnen Platten an den Flächen, an denen sie verbunden werden sollen, mit einem organischen Lösemittel für Polystyrol gleichmäßig benetzt werden. Dadurch wird die Schaumstoffoberfläche angelöst und die Platten können anschließend miteinander verpresst werden. Als Lösungsmittel eignen sich beispielsweise Kohlenwasserstoffe, Alkohole oder Ether, die einen Siedepunkt zwischen 50 und 250 °C aufweisen. Weiterhin können in dem Verfahren gemäß EP-A 1318164 die Schäumhäute an den Oberflächen der miteinander zu verbindenden Platten geschält werden, bevor sie mit dem Lösungsmittel benetzt werden. Die so hergestellten XPS-Platten weisen bevorzugt eine Dicke von mehr als 100 mm auf.

EP-A 1213119 offenbart ein Verfahren zur Herstellung von extrudierten Schaumplatten großer Dicke durch Quellverschweißen von mindestens zwei Polystyrolschaumplatten. Diese Polystyrolschaumplatten werden extrusionshautlos eingesetzt. Zum Quellschweißen werden organische Lösemittel eingesetzt, die einen Siedepunkt unterhalb von 150 °C aufweisen. Diese können auch als Gemisch mit Wasser eingesetzt werden.

In DE-A 10106341 wird ein Verfahren zur Herstellung von extrudierten Kunststoffschaumplatten von großer Dicke offenbart. Gemäß dem darin beschriebenen Verfahren können ausgehend von mindestens zwei Ausgangsplatten aus Kunststoffschaum neue Platten mit einer Mindestdicke von 70 mm hergestellt werden. Bei den Ausgangsplatten handelt es sich bevorzugt um fluorchlorkohlenwasserstofffreie Polystyrolschaumplatten, die an der Berührungsfläche extrusionshautlos sind und miteinander verbunden werden, indem ein diffusionsoffener Kleber oder mechanische Verbindungselemente verwendet werden. Als Polystyrolschaumplatten eignen sich insbesondere XPS-Platten.

DE-A 4421016 offenbart ein Verfahren zur Herstellung von CO₂-geschäumten Kunststoffplatten großer Dicke, insbesondere aus Polystyrol und/oder Polyethylen, wobei eine Dopplung der entsprechenden Ausgangsplatten durch thermisches Verschweißen erfolgt. Das thermische Verschweißen wird mit Hilfe eines Heizschwerts durchgeführt, wodurch die Oberflächen der eingesetzten Kunststoffschaumplatten angeschmolzen werden. Die zu verschweißenden Ausgangsplatten werden über das Heizschwert gezogen, wobei es zu einem direkten Kontakt von Heizschwert und Ausgangsplatten kommt. Das vorzugsweise mit einer Teflonschicht versehene Heizschwert kann elektrisch oder mit einem durchfließenden Heizmedium auf die notwendige Schweißtemperatur gebracht werden, die je nach Kunststoffschaum zwischen 100 und 150 °C beträgt.

Thermische Dämmstoffe aus XPS-Kompositmaterialien, die dreilagig sind, werden in WO 2012/016991 beschrieben. Die Dreilagigkeit der Kompositmaterialien ergibt sich dadurch, dass eine untere, eine zentrale und eine obere XPS-Platte zu dem XPS-Kompositmaterial vereinigt werden, wobei jede nach außen gerichtete Seite dieses XPS-Kompositmaterials eine Extrusionshaut umfasst. Die Kontaktseiten der zentralen XPS-Platte weisen ebenfalls eine Extrusionshaut auf, an den entsprechenden Kontaktseiten der oberen sowie unteren XPS-Platte wird diese allerdings mechanisch entfernt. Die einzelnen XPS-Platten werden zum XPS-Kompositmaterial durch thermisches Verschweißen an den Kontaktflächen zusammengefügt. Das thermische Verschweißen wird bevorzugt unter Verwendung eines Heizschwerts sowie mittels direktem Kontakt von Heizschwert mit den zu verschweißenden XPS-Platten durch Bewegung der XPS-Platten über ein starr angeordnetes Heizschwert durchgeführt. Die zwischen den einzelnen XPS-Platten ausgebildete Schweißnaht kann Teilbereiche von unterschiedlicher Intensität aufweisen, was bedeutet, dass die entsprechende Schweißnaht an einigen Stellen stärker, an anderen Stellen hingegen schwächer ausgebildet ist.

EP-A 2578381 betrifft ein Verfahren zur Herstellung von mehrschichtigen Plastikplatten wie beispielsweise XPS-Platten durch thermisches Verschweißen der entsprechenden dünneren Ausgangsplatten unter Verwendung eines zweigeteilten Heizelements. Das zweiteilige Heizelement ist in Plattenform ausgeführt und die beiden Plattenteile werden von außen kommend auf eine Ebene zwischen die beiden zu verschweißenden Ausgangsplatten geführt, so dass sich die beiden Plattenteile berühren und sinngemäß eine einzige (auf das Doppelte gegenüber den jeweiligen Plattenteilen) verbreiterte Heizplatte darstellen. Das thermische Verschweißen wird vorzugsweise ohne direkten Kontakt zwischen den Heizelementen und den zu verschweißenden Plastikplatten durchgeführt. Das Heizelement wird für eine ausreichend lange Zeit zwischen den zu verschweißenden Ausgangsplatten gehalten. Eine konkrete Zeitangabe für den Begriff "ausreichend lange Zeit" ist in EP-A 2578381 jedoch nicht enthalten. Vielmehr ist die Zeit dann ausreichend, wenn die Ausgangsplatten an den jeweiligen Oberflächen im Wesentlichen in einem geschmolzenen Zustand vorliegen.

Ein weiteres Verfahren zur Herstellung von mehrschichtigen thermoplastischen Schaumstoffen durch thermisches Verschweißen von entsprechend dünneren Ausgangsplatten wird in US-A 4764328 offenbart. Bei diesem Verfahren findet unter Verwendung einer einzelnen Heizplatte ein direkter Kontakt zwischen Heizplatte und den zu verschweißenden Oberflächen der Ausgangsplatten beim Verschweißungsvorgang statt. Die Heizplatte kann gegebenenfalls auch in zwei Teilen vorliegen. Nachdem die zu verschweißenden Oberflächen unter Verwendung der Heizplatte soweit erhitzt worden sind, dass sie sich in einem flüssigen Zustand befinden, können die Ausgangsplatten in weniger als einer Sekunde nach Entfernung der Heizplatten verpresst werden.

DE-A 10 2012 204822 betrifft ein Verfahren zum dauerhaften flächigen Verbinden von zwei Werkstoffplatten von zwei aufgeschäumten Materialien. Eine erste und eine zweite Werkstoffplatte werden jeweils mit einer Fördereinrichtung in der gewünschten Orientierung und Deckung passgenau übereinander positioniert, einer Schweißstation zugeführt und dort entlang eines Trennschwerts bewegt. Durch die Positionierung des Trennschwertes zwischen den einander zugewandten Oberflächen der beiden Werkstoffplatten wird ein Spalt mit definierter Spaltbreite erzeugt. Durch ein sich im Spaltstrom abwärts zum Trennschwert befindendes fest installiertes Wärmeelement, vorzugsweise ein Heizschwert, werden durch berührungsfreie Wärmeübertragung die einander zugewandten Oberflächen der beiden Werkstoffplatten mit Wärme beaufschlagt, so dass mindestens eine dieser Oberflächen erweicht wird oder anschmilzt. Anschließend werden die beiden Werkstoffplatten durch Andrückelemente zusammengefügt, die die beiden Werkstoffplatten derart gegeneinander drücken, dass deren einander zugewandte Oberflächen aufgrund der vorangegangenen Wärmebeaufschlagung durch das Wärmeelement stoffschlüssig miteinander verbunden werden.

JP 2012 232564 offenbart ein Verfahren, um thermoplastische Materialien mit anderen thermoplastischen Materialien, Holz oder beispielsweise Papier zu verschweißen. Dabei werden zwei Heizelemente auf zwei zueinander parallelen Ebenen, die miteinander verbunden sind, zwischen die Platten eingeführt und die Platten so erhitzt. Nach dem Entfernen des Heizelements werden die Platten durch Vibrationsschweißen miteinander verbunden.

Ein grundlegendes Problem beim thermischen Verschweißen ist die Brennbarkeit und das Erfüllen von Brandtests für das erhaltene Produkt. Selbst wenn man berücksichtigt, dass die zu verschweißenden dünneren Platten nicht oder nur sehr schwer brennbar sind, gilt eine entsprechende Aussage nicht automatisch für das erhaltene Produkt, also die zwei- oder mehrlagigen Platten mit einer (gegenüber den eingesetzten dünneren Ausgangsplatten) größeren Dicke. Dieses unterschiedliche Brandverhalten ist in der Ausbildung der so genannten "Schweißnaht" während des thermischen Verschweißens begründet. Die Schweißnaht bildet sich an den Stellen aus, an denen die Oberflächen der eingesetzten dünneren Platten thermisch miteinander verschweißt werden. In Abhängigkeit des Vorhandenseins bzw. der Dicke der Schweißnaht wird der Brandtest B2 (gemäß DIN 4102) bestanden oder nicht. Die Flammen brennen umso höher, je umfangreicher bzw. dicker die Schweißnaht ist. Dieses negative Brandverhalten (gegenüber den dünneren Ausgangsplatten) der zwei- oder mehrlagigen Platten aufgrund des Vorhandenseins einer Schweißnaht wird auch als "Dochteffekt" bezeichnet. Ist hingegen keine Schweißnaht oder nur eine sehr dünne Schweißnaht vorhanden, sind die jeweiligen dünneren Platten nicht fest genug miteinander verbunden, so dass das entsprechende Produkt nicht stabil ist.

Die der vorliegenden Erfindung zugrunde liegende Aufgabe besteht in der Bereitstellung eines neuen Verfahrens zur Herstellung von zwei- oder mehrlagigen thermoplastischen Schaumstoffplatten durch thermisches Verschweißen.

Gelöst wird die Aufgabe durch ein Verfahren zur Herstellung einer zumindest zweilagigen thermoplastischen Schaumstoffplatte durch thermisches Verschweißen von mindestens zwei dünneren thermoplastischen Schaumstoffplatten, umfassend die folgenden Schritte a) bis e):
a) zwei dünne thermoplastische Schaumstoffplatten werden in einem Abstand (a) parallel zueinander ausgerichtet, so dass sie einen Zwischenraum ausbilden,
b) in den Zwischenraum wird mindestens ein Heizelement parallel zu den beiden dünneren thermoplastischen Schaumstoffplatten eingeführt, wobei sich die Oberflächen der beiden dünneren thermoplastischen Schaumstoffplatten und das Heizelement nicht gegenseitig berühren,
c) das Heizelement wird so weit zwischen die beiden dünneren thermoplastischen Schaumstoffplatten eingeführt, bis zwischen den beiden dünneren thermoplastischen Schaumstoffplatten bezogen auf jede Stelle der jeweiligen Oberfläche der beiden dünneren thermoplastischen Schaumstoffplatten zumindest zeitweise sich das Heizelement befunden hat,
d) das Heizelement wird wieder vollständig aus dem Zwischenraum entfernt,
e) mindestens eine der beiden dünneren thermoplastischen Schaumstoffplatten wird gegen die Oberfläche der jeweiligen anderen dünneren thermoplastischen Schaumstoffplatte gedrückt,
wobei während den Schritten b), c) und d) warme Luft zwischen die beiden dünneren thermoplastischen Schaumstoffplatten geleitet wird.

Die mit dem erfindungsgemäßen Verfahren hergestellten zumindest zweilagigen thermoplastischen Schaumstoffplatten zeichnen sich dadurch aus, dass die entsprechende Anzahl an dünneren thermoplastischen Schaumstoffplatten auf sehr stabile Weise zu den zumindest zweilagigen thermoplastischen Schaumstoffplatten (Produkt) zusammengefügt werden kann. Die im erfindungsgemäßen Verfahren gebildeten Schweißnähte, die aufgrund des thermischen Verschweißens die einzelnen dünneren thermoplastischen Schaumstoffplatten zu einer zumindest zweilagigen thermoplastischen Schaumstoffplatte verbinden, zeichnen sich durch eine hohe Stabilität sowie insbesondere Homogenität aus. Die Schweißnähte sind dann homogen, wenn sich die Schweißnahtdicke über die gesamte Ausdehnung der Schweißnaht überhaupt nicht oder nur in geringem Ausmaß ändert.

Das erfindungsgemäße Verfahren ist von seinem Prinzip her ein so genanntes "kontaktloses Verschweißen" (oder "berührungsloses Erhitzen"), da die Wärmeübertragung von den Heizelementen auf die zu verschweißenden Oberflächen der dünneren thermoplastischen Schaumstoffplatten (auch als "Ausgangsplatten" bezeichnet) ohne direkten Kontakt zwischen Heizelement und Ausgangsplatte stattfindet. Dies hat den Vorteil, dass im erfindungsgemäßen Verfahren die Heizelemente nicht durch anhaftende Schaumstoffreste verschmutzt werden können und keine (oder nur in sehr geringem Umfang) Dellen bzw. Einfallsstellen auf den Oberflächen der zu verschweißenden Ausgangsplatten gebildet werden. Diese Einfallsstellen sind jedoch insbesondere in den Randbereichen der Ausgangsplatten ein generelles Problem bei Verfahren, die auf einem direkten Kontakt zwischen Heizelement und zu verschweißender Oberfläche beruhen. Solche Dellen/Einfallsstellen führen zu verstärkten Inhomogenitäten in der Schweißnaht, was sich wiederum (wie nachfolgend aufgeführt) negativ auf das Brandverhalten, aber auch auf die Stabilität der zumindest zweilagigen thermoplastischen Schaumstoffplatten auswirken kann.

Da im vorliegenden Verfahren während Verfahrensschritt b), c) und d) warme Luft zwischen die zu verschweißenden Ausgangsplatten geleitet wird, wird eine gleichmäßige Schmelze und Schweißschicht sichergestellt. In den im Stand der Technik beschriebenen Verfahren wird beim Ein- und Ausfahren des Heizelements kalte Luft hinter dem Heizelement hergezogen, während warme Luft vor dem Heizelement aus dem Zwischenraum hinausgeschoben wird. Die auf diese Weise eintretende Pfropfenströmung oder turbulente Strömung zwischen den zu verschweißenden Platten hat wiederum negative Auswirkungen auf die Homogenität und somit Stabilität der zu bildenden Schweißnaht. Indem definiert warme Luft zwischen die zu verschweißenden Ausgangsplatten geleitet wird, indem also genau die Temperatur und die Menge der Luft, die zwischen die beiden Platten strömt, geregelt wird, können diese störenden Pfropfenströmungen oder turbulenten Strömungen deutlich reduziert werden, was sich positiv auf die Homogenität und Stabilität der zu bildenden Schweißnaht auswirkt. Eine noch weitere Reduktion dieser störenden Strömungen wird erreicht, indem zwei Heizelemente eingesetzt werden. Insbesondere können im erfindungsgemäßen Verfahren zwei Heizelemente verwendet werden, die auf parallelen Ebenen aus zueinander entgegengesetzten Richtungen in den Zwischenraum zwischen den Ausgangsplatten eingeführt werden. Eine weitere Verstärkung des positiven technischen Effekts wird erhalten, wenn auch das Ausfahren der beiden Heizelemente in jeweils entgegengesetzter Richtung erfolgt. Besonders vorteilhaft ist dabei das Einfahren und Ausfahren der einzelnen Platten ohne Richtungsänderung, weil dadurch das erfindungsgemäße Verfahren schneller durchgeführt werden kann im Vergleich zu einer Variante mit Richtungsumkehr der beiden Heizelemente beim Ausfahren im Vergleich zum Einfahrschritt.

Ein weiterer Vorteil ist im erfindungsgemäßen Verfahren darin zu sehen, dass hinsichtlich der Plattendicke der Ausgangsplatten keine Begrenzungen erforderlich sind. Im Gegensatz dazu können in Verfahren gemäß dem Stand der Technik, beispielsweise wie sie in DE-A 10 2012 204822 offenbart sind, nur Ausgangsplatten mit einer maximalen Dicke von 80 bis 100 mm verarbeitet werden, weil aufgrund des prinzipiell V-förmigen Zuführens (und Bewegens) der Ausgangsplatten mindestens eine der Ausgangsplatten während des thermischen Verschweißens geknickt wird. Da bei diesem Verfahren ein prinzipiell starres Heizelement, insbesondere ein Heizschwert, verwendet wird, müssen die Ausgangsplatten über das Heizelement bewegt werden. Im Gegensatz dazu wird im erfindungsgemäßen Verfahren das Heizelement zwischen den in diesem Verfahrensstadium prinzipiell starren Ausgangsplatten bewegt. Ein Bewegen der Ausgangsplatten findet im erfindungsgemäßen Verfahren prinzipiell erst nach der Entfernung der Heizelemente aus dem Plattenzwischenraum statt, wobei die zu verschweißenden Ausgangsplatten durch Bewegungen von mindestens einer der Ausgangsplatten miteinander verbunden werden. Mit dem erfindungsgemäßen Verfahren lassen sich so problemlos drei- oder höherlagige thermoplastische Schaumstoffplatten von beliebiger Dicke herstellen.

Ein weiterer Vorteil des erfindungsgemäßen Verfahrens ist darin zu sehen, dass prinzipiell sehr kurze Umstellzeiten durchgeführt werden können. Unter "Umstellzeiten" wird erfindungsgemäß die Zeit verstanden, die zwischen Erhitzen bzw. Aufschmelzen der Schaumstoffoberfläche und dem Zusammenfügen der erhitzten bzw. aufgeschmolzenen Schaumstoffoberfläche verstreicht. Im erfindungsgemäßen Verfahren ist dies somit die Zeitspanne, die mit dem Einführen des Heizelements gemäß Schritt b) beginnt und mit dem Zusammenführen der entsprechenden Ausgangsplatten gemäß Schritt e) endet. Eine kurze Umstellzeit kann insbesondere aufgrund der Beweglichkeit der Heizelemente im Rahmen eines kontaktlosen Verschweißens erzielt werden. Dieser Vorteil tritt insbesondere dann auf, wenn zwei Heizelemente verwendet werden, die auf parallel zueinander versetzten Ebenen zwischen die zu verschweißenden Platten eingeführt werden.

Wie vorstehend bereits erwähnt, wirkt sich die Homogenität bzw. die Dicke der Schweißnähte zwischen den Ausgangsplatten positiv auf das Flammverhalten (verbesserter Flammschutz) des mit dem erfindungsgemäßen Verfahren erhaltenen Produktes aus. Vorzugsweise bestehen die mit dem erfindungsgemäßen Verfahren hergestellten zumindest zweilagigen thermoplastischen Schaumstoffplatten den Brandtest B2 (gemäß DIN 4102). Dies bedeutet, dass im Rahmen der vorliegenden Erfindung der Dochteffekt, insbesondere beim Brandtest B2, vermieden werden kann, so dass in den erfindungsgemäßen zumindest zweilagigen thermoplastischen Schaumstoffplatten die Schweißnaht der Brandprüfung gemäß Brandtest B2 standhält.

Dies wird im Rahmen der vorliegenden Erfindung vorzugsweise erzielt, indem die beim thermischen Verschweißen von zwei Ausgangsplatten zwischen diesen Ausgangsplatten gebildete Schweißnaht eine Dicke von (durchschnittlich) 30 bis 200 µm aufweist. Die Dicke der Schweißnaht kann erfindungsgemäß insbesondere durch den Abstand des Heizelements zu den zu verschweißenden Ausgangsplatten, die Temperatur des Heizelements sowie die Geschwindigkeit des Heizelements, mit der es in den Zwischenraum zwischen die Ausgangsplatten ein- sowie ausgeführt wird, gesteuert werden. Wird beispielsweise eine drei- oder mehrlagige thermoplastische Schaumstoffplatte hergestellt, weisen vorzugsweise alle zwischen den einzelnen Plattenpaaren gebildeten Schweißnähte eine Dicke von (durchschnittlich) 30 bis 200 µm auf, wobei die entsprechenden Dicken zwischen den einzelnen Plattenpaaren auch variieren können. Die zumindest zweilagigen thermoplastischen Schaumstoffplatten als solche weisen weiterhin eine hohe Zugfestigkeit auf, vorzugsweise eine Zugfestigkeit von > 0,15 N/mm².

Ein besonders stabiler Zusammenhalt der einzelnen dünneren thermoplastischen Schaumstoffplatten wird dann erzielt, wenn diese auf Temperaturen oberhalb der Glasübergangs- oder Schmelztemperatur des verwendeten Thermoplasten erhitzt werden. Vorzugsweise werden die einzelnen dünneren thermoplastischen Schaumstoffplatten anschließend zusätzlich miteinander verpresst. Die mit dem erfindungsgemäßen Verfahren hergestellten zumindest zweilagigen thermoplastischen Schaumstoffplatten, insbesondere diejenigen, bei denen die Oberfläche der Schaumstoffplatten auf Temperaturen oberhalb der Glasübergangstemperatur erhitzt werden, haben als weiteren vorteilhafte Eigenschaft eine hohe Wasserdampfdurchlässigkeit und/oder Festigkeit der miteinander thermisch verschweißten Schaumstoffplatten.

Sofern das erfindungsgemäße Verfahren unter Verwendung eines Absorbers von elektromagnetischer Strahlung durchgeführt wird, wobei der Absorber auf die entsprechenden Oberflächen der dünneren thermoplastischen Schaumstoffplatten, die miteinander thermisch verschweißt werden, aufgetragen wird, ist ein weiterer Vorteil darin zu sehen, dass die Strahlungsdurchlässigkeit der zumindest zweilagigen thermoplastischen Schaumstoffplatten als solche reduziert wird und/oder das Wärmeleitfähigkeitsverhalten verbessert werden kann. Die Wärmeleitfähigkeit kann um bis zu 10 % vermindert werden im Vergleich zu herkömmlichen Platten, bei denen kein Absorber von elektromagnetischer Strahlung verwendet wird. Eine Verminderung der Wärmeleitfähigkeit bedeutet ein (Wärme-) Dämmungseffekt.

Nachfolgend wird das erfindungsgemäße Verfahren zur Herstellung einer zumindest zweilagigen thermoplastischen Schaumstoffplatte näher definiert.

Die mit dem erfindungsgemäßen Verfahren hergestellte thermoplastische Schaumstoffplatte ist zumindest zweilagig, sie kann also genau zwei Lagen aufweisen oder dreilagig, vierlagig, fünflagig oder noch höherlagig sein. Wie vorstehend bereits ausgeführt, ergibt sich die Anzahl der Lagen der thermoplastischen Schaumstoffplatte als solche aus der Anzahl der dünneren thermoplastischen Schaumstoffplatten, die miteinander thermisch verschweißt werden. Die dünnen thermoplastischen Schaumstoffplatten werden auch als Ausgangsplatten bezeichnet. Im Falle einer zweilagigen thermoplastischen Schaumstoffplatte als solche werden also zwei dünnere thermoplastische Schaumstoffplatten miteinander thermisch verschweißt. Bei einer drei- oder vierlagigen thermoplastischen Schaumstoffplatte als solcher werden somit drei bzw. vier dünnere thermoplastische Schaumstoffplatten miteinander thermisch verschweißt. Sofern noch höherlagige thermoplastische Schaumstoffplatten als solche hergestellt werden sollen, beispielsweise eine zehnlagige thermoplastische Schaumstoffplatte, muss demzufolge die der Anzahl der Lagen entsprechende Anzahl an dünneren thermoplastischen Schaumstoffplatten, beispielsweise zehn dünnere thermoplastischen Schaumstoffplatten, miteinander thermisch verschweißt werden.

Vorzugsweise ist die erfindungsgemäße thermoplastische Schaumstoffplatte zweilagig, dreilagig oder vierlagig, insbesondere ist die erfindungsgemäße thermoplastische Schaumstoffplatte zweilagig. Das thermische Verschweißen als solches (Durchführung) wird weiter unten im Text im Zusammenhang mit dem erfindungsgemäßen Herstellungsverfahren näher definiert.

Die zum thermischen Verschweißen verwendeten dünneren thermoplastischen Schaumstoffplatten entsprechen hinsichtlich ihrer chemischer Zusammensetzung den im Rahmen der vorliegenden Erfindung hergestellten zumindest zweilagigen thermoplastischen Schaumstoffplatten als solchen (ohne Berücksichtigung der im Rahmen des Verschweißungsvorganges optional auf die Oberflächen aufgebrachten Komponenten wie Absorber von elektromagnetischer Strahlung oder Flammschutzmittel bzw. ohne Berücksichtigung der infolge der Ausbildung der Schweißnaht an den entsprechenden Oberflächen auftretenden chemischen Veränderungen/Reaktionen). Die jeweils thermisch miteinander zu verschweißenden dünneren thermoplastischen Schaumstoffplatten weisen vorzugsweise dieselben Dimensionen und/oder dieselbe chemische Zusammensetzung auf. Gegebenenfalls können aber auch dünnere thermoplastische Schaumstoffplatten mit unterschiedlichen Dimensionen und/oder unterschiedlicher chemischer Zusammensetzung miteinander thermisch verschweißt werden. Werden beispielsweise drei dünnere thermoplastische Schaumstoffplatten miteinander thermisch verschweißt, die allesamt die gleiche Dimensionierung aufweisen und (beispielsweise) ein extrudierter Polystyrol-Schaumstoff (XPS-Schaumstoff) sind, wird dadurch ein dreilagiger thermoplastischer extrudierter Polystyrol-Schaumstoff (XPS) erhalten.

Die Dimensionierung der thermisch miteinander zu verschweißenden dünneren thermoplastischen Schaumstoffplatten ist beliebig. Hinsichtlich ihrer Länge und Breite können sie Maße im Zentimeterbereich bis hin zu mehreren Metern aufweisen. Hinsichtlich der dritten Dimension (Dicke) sind theoretisch ebenfalls beliebige Maße denkbar, in der Praxis weisen die dünneren thermoplastischen Schaumstoffplatten eine Dicke von 20 bis 200 mm auf, bevorzugt von 50 bis 100 mm. Bezogen auf ein rechtwinkliges Koordinatensystem wird erfindungsgemäß die Länge einer Ausgangsplatte bzw. einer zumindest zweilagigen thermoplastischen Schaumstoffplatte als solche auch als "x-Richtung" bezeichnet, die entsprechende Breite als "y-Richtung" und die Dicke als "z-Richtung".

Die Dicke der zumindest zweilagigen thermoplastischen Schaumstoffplatte nimmt mit einer zunehmenden Anzahl von Verschweißungsschritten kontinuierlich zu. Eine dreilagige thermoplastische Schaumstoffplatte wird beispielsweise durch das Verschweißen einer einzelnen dünneren thermoplastischen Schaumstoffplatte mit einer bereits zweilagigen thermoplastischen Schaumstoffplatte, die für sich wiederum eine Ausgangsplatte bezüglich der zu erzielenden dreilagigen thermoplastischen Schaumstoffplatte darstellt, hergestellt.

Die vorstehend beziehungsweise nachfolgend angegebenen Werte hinsichtlich der Dicke einer dünneren thermoplastischen Schaumstoffplatte beziehen sich auf die entsprechenden Werte einer Ausgangsplatte, die für sich genommen noch keinen thermischen Verschweißungsschritt erfahren hat. Sofern eine zwei- oder höherlagige thermoplastische Schaumstoffplatte als Ausgangsplatte für einen weiteren Verschweißungsschritt eingesetzt werden soll, sind die Dicken der entsprechenden zwei- oder höherlagigen Ausgangsplatten entsprechend höher.

Die Dicke der im erfindungsgemäßen Verfahren hergestellten zumindest zweilagigen thermoplastischen Schaumstoffplatten ergibt sich somit aus der Gesamt-Dicke der insgesamt eingesetzten dünneren thermoplastischen Schaumstoffplatten (Ausgangsplatten). Aufgrund des thermischen Verschweißens werden die jeweils miteinander zu verschweißenden Oberflächen der Ausgangsplatten zumindest etwas auf- oder angeschmolzen (Aufschmelzschritt), was in Abhängigkeit der zugeführten Wärmemenge zu einer gewissen Reduzierung der Dicke der jeweiligen Ausgangsplatte führen kann. An den Stellen, an denen die Ausgangsplatten miteinander thermisch verschweißt werden, bildet sich eine Schweißnaht aus. Insbesondere wenn im Rahmen des Herstellungsverfahrens ein Verpressungs- und/oder Aufschmelzschritt mit großer Wärmezufuhr durchgeführt wird, ist die Dicke der zumindest zweilagigen thermoplastischen Schaumstoffplatten als solche geringer als die Summe der jeweiligen Dicken der eingesetzten dünneren thermoplastischen Schaumstoffplatten.

Vorzugsweise weisen die zwei dünneren thermoplastischen Schaumstoffplatten in Schritt a) jeweils eine Länge (x-Richtung) von 500 bis 2800 mm, vorzugsweise von 1000 bis 1500 mm, eine Breite (y-Richtung) von 500 bis 1250 mm, vorzugsweise von 500 bis 900 mm, und eine Dicke (z-Richtung) von 20 bis 200 mm, vorzugsweise von 50 bis 100 mm, auf.

Die zum thermischen Verschweißen eingesetzten dünneren thermoplastischen Schaumstoffplatten als solche sind dem Fachmann prinzipiell bekannt. Geeignete thermoplastische Schaumstoffplatten sind beispielsweise in EP-A 1 566 490 oder in Form von Blends in WO 2009/047487 offenbart. Beispielsweise können Platten aus amorphen, kristallinen oder teilkristallinen thermoplastischen Schaumstoffen eingesetzt werden.

Vorzugsweise sind die dünneren thermoplastischen Schaumstoffplatten ein Partikelschaumstoff oder ein Extrusionsschaumstoff. Weiterhin ist es bevorzugt, dass die dünneren thermoplastischen Schaumstoffplatten eine Dichte 10 bis 500 g/l, vorzugweise von 15 bis 200 g/l, insbesondere von 20 bis 150 g/l, aufweisen. Ein bevorzugter Partikelschaumstoff ist Styropor®, das kommerziell von der BASF SE erhältlich ist. Mehr bevorzugt sind die dünneren thermoplastischen Schaumstoffplatten ein Extrusionsschaumstoff. Der Extrusionsschaumstoff ist vorzugsweise ein Polysulfon (PSU), ein Polyethersulfon (PESU), ein Polyphenylsulfon (PPSU), ein Polyethylenterephthalat (PET), ein Polystyrol oder ein aus Styrol hergestelltes Copolymer. Gegebenenfalls können auch Gemische aus solchen Polymeren eingesetzt werden. Besonders bevorzugt ist der Extrusionsschaumstoff ein Polystyrol oder ein aus Styrol hergestelltes Copolymer. Insbesondere bevorzugt ist der Extrusionsschaumstoff extrudiertes Polystyrol (XPS), der beispielsweise unter der Bezeichnung Styrodur® von der BASF SE kommerziell erhältlich ist.

Sofern der Extrusionsschaumstoff auf Basis von (mindestens) einem aus Styrol hergestellten Copolymer ist (auch als Styrolcopolymerisate bezeichnet), bedeutet dies, dass zur Herstellung dieses Copolymeren neben dem Monomeren Styrol mindestens ein weiteres Monomer erforderlich ist. Vorzugsweise wird dieses Copolymer aus Styrol und einem weiteren Monomeren hergestellt. Als Comonomere von Styrol eignen sich prinzipiell alle mit Styrol polymerisierbaren Monomere. Vorzugsweise sind mindestens 50 Gew.-% Styrol, bezogen auf das Gesamtgewicht des Copolymers, in diesem Copolymer einpolymerisiert.

Vorzugsweise weist ein aus Styrol hergestelltes Copolymer als Comonomer zu Styrol ein Monomer auf, das ausgewählt ist aus α-Methylstyrol, kernhalogenierten Styrolen, kernalkylierten Styrolen, Acrylnitril, Acrylsäureester, Methacrylsäureester, N-Vinylverbindungen, Maleinsäureanhydrid, Butadien, Divinylbenzol oder Butandioldiacrylat. Acrylsäureester sowie Methacrylsäureester sind vorzugsweise erhältlich aus Alkoholen mit 1 bis 8 Kohlenstoffatomen. Eine geeignete N-Vinylverbindung ist beispielsweise Vinylcarbazol. Bevorzugte aus Styrol hergestellte Copolymere sind Styrol-Acrylnitril-Copolymere (SAN) oder Acrylnitril-Butadien-Styrol-Copolymere (ABS).

Die Durchführung des thermischen Verschweißens als solchem ist dem Fachmann bekannt. Der Effekt des thermischen Verschweißens wird bei den zu verschweißenden Oberflächen erfindungsgemäß dadurch erzielt, indem die jeweiligen Oberflächen der Ausgangsplatten einer Wärmequelle ausgesetzt werden. Im erfindungsgemäßen Verfahren stellt das mindestens eine Heizelement, das parallel zu den beiden dünneren thermoplastischen Schaumstoffplatten in den entsprechenden Zwischenraum eingeführt wird, die Wärmequelle dar.

Durch das thermische Verschweißen bildet sich zwischen den zu verschweißenden Oberflächen der Ausgangsplatten eine Schweißnaht aus. Anstelle des Begriffs "Schweißnaht" können auch die Begriffe "Schweißhaut" oder "Schweißzone" verwendet werden. Pro zu verschweißendem Ausgangsplattenpaar wird beim thermischen Verschweißen zwischen den miteinander in Kontakt gebrachten Oberflächen der beiden Ausgangsplatten eine Schweißnaht ausgebildet. Wird beispielsweise eine dreilagige thermoplastische Schaumstoffplatte hergestellt, werden drei dünnere thermoplastische Schaumstoffplatten (Ausgangsplatten) eingesetzt und somit zwei Schweißnähte ausgebildet. Vorzugsweise weist mindestens eine Schweißnaht eine Dicke von 30 bis 200 µm auf. Vorzugsweise weist jede Schweißnaht eine Dicke von 30 bis 200 µm auf, insbesondere hat jede Schweißnaht die gleiche Dicke (beispielsweise 100 µm), Im vorstehenden Beispiel weisen bei dieser bevorzugten Ausgestaltung also beide Schweißnähte eine Dicke im Bereich von 30 bis 200 µm auf, wobei die Dicke (Stärke) der ersten Schweißnaht im Vergleich zur zweiten Schweißnaht gleich oder verschieden sein kann, vorzugsweise sind beide Werte gleich.

Vorzugsweise weist die Schweißnaht eine Dicke von 50 bis 150 µm, mehr bevorzugt von 70 bis 130 µm, insbesondere von 80 bis 100 µm, auf. Die im Rahmen der vorliegenden Erfindung für die Dicke einer Schweißnaht aufgeführten Zahlenwerte sind als Durchschnittswert zu verstehen, wobei vorzugsweise zur Ermittlung eines solchen Durchschnittswerts fünf Messpunkte, die über die gesamte Länge der Schweißnaht verteilt sind und die durch Lichtmikroskopie bestimmt werden, herangezogen werden. Erfindungsgemäß erstrecken sich die vorgenannten Werte hinsichtlich der Schweißnahtdicke über den kompletten Umfang der Schweißnaht.

Die erfindungsgemäßen thermoplastischen Schaumstoffplatten beziehungsweise die entsprechenden Ausgangsplatten können beliebige Werte hinsichtlich ihrer Zellgröße und/oder mittleren Zellenzahl aufweisen. Die jeweiligen Werte der Ausgangsplatten finden sich auch in den erfindungsgemäßen thermoplastischen Schaumstoffplatten wieder, das heißt sie werden durch das thermische Verschweißen nicht verändert. Allerdings ist es bevorzugt, dass die Zellgröße der thermoplastischen Schaumstoffplatte < 150 µm, vorzugsweise < 80 µm ist und/oder die mittlere Zellenzahl > 6 Zellen/mm beträgt. Während Ausgangsplatten mit einer mittleren Zellgröße 200 µm und größer eine erhöhte Oberflächenrauigkeit und grobe Zellstruktur aufweisen, haben insbesondere Ausgangsdaten mit einer mittleren Zellgröße < 150 µm, vorzugsweise < 80 µm, eine sehr feine Struktur und eine glatte Oberfläche, was sich positiv auf das Bestehen der Brandtests und auf das Wärmeisolationsvermögen auswirkt.

In Schritt a) des erfindungsgemäßen Verfahrens werden zwei dünnere thermoplastische Schaumstoffplatten in einem Abstand (a) parallel zueinander ausgerichtet, so dass sie einen Zwischenraum ausbilden.

Der Abstand (a) ist dabei so gewählt, dass mindestens ein Heizelement zwischen den entsprechenden Ausgangsplatten so bewegt werden kann, dass es die Oberflächen der entsprechenden Ausgangsplatten nicht berührt (siehe auch Ausführungen zum nachfolgenden Schritt b)).

Wird mehr als ein Heizelement im erfindungsgemäßen Verfahren eingesetzt und diese auf parallel zueinander versetzten Ebenen in den Zwischenraum ein- und ausgeführt, so ist der Abstand (a) umso größer, je höher die Zahl der Heizelemente ist. Der Abstand (a) muss dabei mindestens so groß sein, dass die Heizelemente auch einen gewissen Abstand zueinander aufweisen, um ein reibungsloses Ein- und Ausführen der Heizelemente zu gewährleisten.

Vorzugsweise beträgt in Schritt a) der Abstand (a) 10 bis 150 mm, insbesondere 15 bis 80 mm.

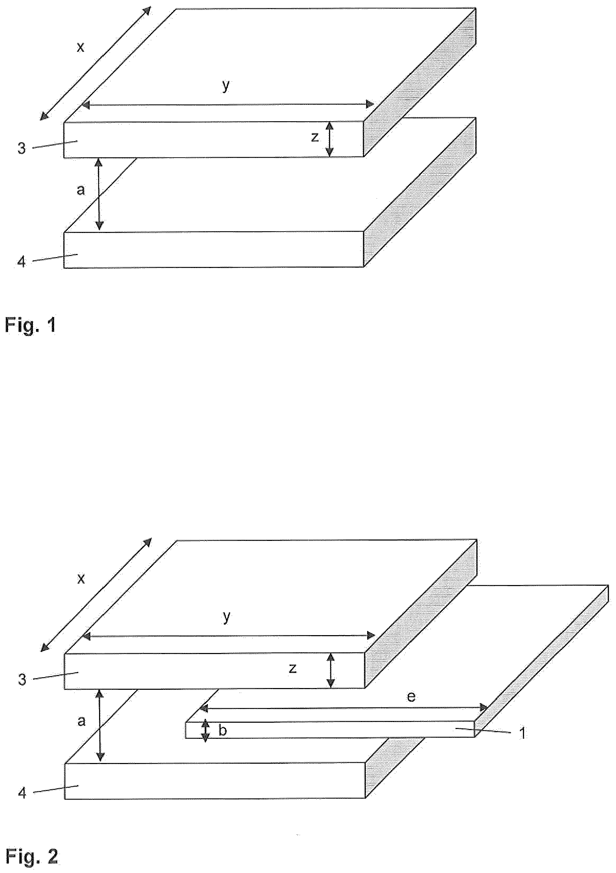

In Figur 1 ist die parallele Ausrichtung der Ausgangsplatten gemäß Schritt a) anschaulich dargestellt. Die beiden dünneren thermoplastischen Schaumstoffplatten (Ausgangsplatten) sind durch die Bezugszeichen 3 und 4 gekennzeichnet. "x" stellt die jeweilige Länge der Ausgangsplatte (vorzugsweise 500 bis 2800 mm) dar, "y" steht für die Breite der Ausgangsplatten (vorzugsweise 500 bis 1250 mm) und "z" steht für die Dicke der Ausgangsplatten (vorzugsweise 20 bis 200 mm). Die beiden Ausgangsplatten 3 und 4 sind parallel im Abstand (a) zueinander ausgerichtet, der vorzugsweise 10 bis 150 mm beträgt.

In Schritt b) des erfindungsgemäßen Verfahrens wird in den Zwischenraum mindestens ein Heizelement, parallel zu den beiden dünneren thermoplastischen Schaumstoffplatten, eingeführt, wobei sich die Oberflächen der beiden dünneren thermoplastischen Schaumstoffplatten und das Heizelement nicht gegenseitig berühren.

Als Heizelemente können erfindungsgemäß alle dem Fachmann bekannten Heizelemente eingesetzt werden, die beweglich sind und ein kontaktloses Verschweißen im Sinne der vorliegenden Erfindung ermöglichen. Erfindungsgemäß kann ein Heizelement, zwei Heizelemente, drei Heizelemente oder mehr Heizelemente verwendet werden. Erfindungsgemäß bevorzugt werden zwei Heizelemente verwendet.

Weiterhin ist es bevorzugt, dass das Heizelement eine Heizplatte ist. Bevorzugte Heizplatten sind IR-Strahler mit einer Oberflächentemperatur von 200 bis 1000 °C, insbesondere bevorzugt von 300 bis 700 °C. Diese können beispielsweise in der Außenposition (Ruheposition) vorgeheizt werden, oder elektrisch über Widerstandsheizung oder mittels Wärmeträgerölen erhitzt werden. Als Außenposition wir die Positionierung des Heizelements aufgefasst, die sich außerhalb des im vorstehenden Schritt definierten Zwischenraums zwischen den beiden Ausgangsplatten befindet.

Das Heizelement kann sowohl längs als auch quer zwischen die beiden dünneren thermoplastischen Schaumstoffplatten eingeführt werden. Erfindungsgemäß ist unter "längs" zu verstehen, dass die Heizplatte in y-Richtung in der xy-Ebene eingeführt wird, "quer" wird erfindungsgemäß verstanden als ein Einführen der Heizplatte in x-Richtung in der xy-Ebene. Erfindungsgemäß bevorzugt ist ein Einführen der Heizplatte in y-Richtung (vergleiche Figur 2). Werden zwei oder mehr Heizelemente eingesetzt, so werden erfindungsgemäß bevorzugt zwei identische Heizelemente, insbesondere Heizplatten verwendet. Es ist erfindungsgemäß auch möglich, dass sich die Heizelemente hinsichtlich ihrer Beschaffenheit, insbesondere ihrer Dicke, voneinander unterscheiden.

Werden zwei oder mehr Heizelemente gemäß Verfahrensschritt b) eingesetzt, so können diese erfindungsgemäß auf eine Ebene aus zwei entgegengesetzten Richtungen in den Zwischenraum zwischen den dünneren thermoplastischen Schaumstoffplatten eingeführt werden. In einer erfindungsgemäßen Ausführungsform werden sie so weit eingeführt, bis sie sich gegenseitig berühren und sich dann wie ein großes Heizelement verhalten.

Erfindungsgemäß besonders bevorzugt ist, sofern mehr als ein Heizelement verwendet wird, eine gerade Anzahl von Heizelementen auch parallel zueinander versetzten Ebenen einzusetzen. Vorzugsweise werden die Heizelemente auf den parallel zueinander versetzten Ebenen aus zwei verschiedenen Richtungen in den Zwischenraum eingeführt.

Besonders bevorzugt werden zwei Heizelemente verwendet, die in Schritt b) auf parallel zueinander versetzten Ebenen parallel zu den beiden dünneren thermoplastischen Schaumstoffplatten eingeführt werden.

Die Dimensionen der Heizelemente werden in Abstimmung mit den entsprechenden Dimensionen der zu verschweißenden Ausgangsplatten gewählt, sowie in Abhängigkeit der Anzahl der Heizelemente. Prinzipiell können die Heizelemente sowohl hinsichtlich ihrer Länge (x-Richtung), ihrer Breite (y-Richtung) als auch ihrer Dicke (z-Richtung) jeweils größer und/oder kleiner als die entsprechende Dimensionierung der zu verschweißenden Ausgangsplatten sein. Bevorzugt ist, dass das Heizelement, insbesondere Heizplatten, in seiner Länge (x-Richtung) jeweils gleich groß oder maximal 10 % größer ist als die entsprechende Länge (x-Richtung) der zwei dünneren thermoplastischen Schaumstoffplatten. Wird genau ein Heizelement eingesetzt, ist es in seiner Breite (y-Richtung) bevorzugt gleich groß oder maximal 10 % größer als die entsprechenden Breiten (y-Richtung) der zwei dünneren thermoplastischen Schaumstoffplatten. Werden zwei oder mehr Heizelemente eingesetzt, betragen ihre Breiten (y-Richtung) 30 bis 100 %, vorzugsweise 60 bis 80 % der entsprechenden Breiten (y-Richtung) der zwei dünneren thermoplastischen Schaumstoffplatten.

Bevorzugt beträgt die Dicke der Heizplatte 5 bis 50 mm.

In Schritt c) des erfindungsgemäßen Verfahrens wird das Heizelement so weit zwischen die beiden dünneren thermoplastischen Schaumstoffplatten eingeführt, bis zwischen den beiden dünneren thermoplastischen Schaumstoffplatten, bezogen auf jede Stelle der jeweiligen Oberfläche der beiden dünneren thermoplastischen Schaumstoffplatten, zumindest zeitweise sich das Heizelement befunden hat.

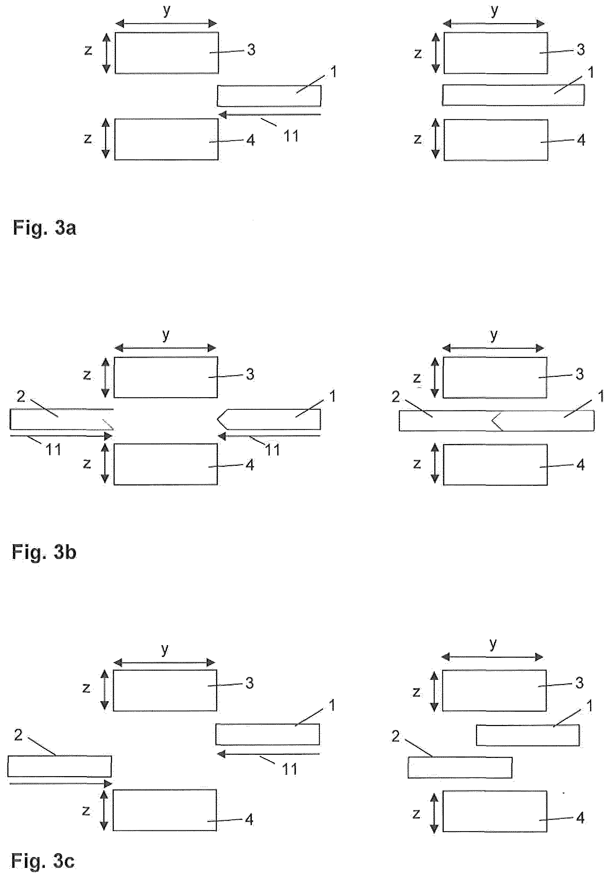

Schritt c) ist bildlich in den Figuren 3a bis 3c für drei bevorzugte Ausführungsformen der vorliegenden Erfindung gezeigt. In den drei Figuren 3a, 3b und 3c ist links jeweils eine Position des mindestens einen Heizelements vor dem Einführen zwischen die beiden dünneren thermoplastischen Schaumstoffplatten gezeigt, rechts eine Position des mindestens einen Heizelements, wenn es sich zwischen den beiden dünneren thermoplastischen Schaumstoffplatten befindet.

Figur 3a zeigt Schritt c) für ein einzelnes Heizelement. Figur 3b zeigt Schritt c) für zwei Heizelemente, die aus zwei entgegengesetzten Richtungen auf einer Ebene zwischen die beiden dünneren thermoplastischen Schaumstoffplatten eingeführt werden bis sie sich gegenseitig berühren und sich dann wie ein großes Heizelement verhalten. In Figur 3c ist Schritt c) für zwei Heizelemente gezeigt, die auf zwei zueinander parallelen Ebenen in den Zwischenraum zwischen die beiden dünneren thermoplastischen Schaumstoffplatten eingeführt werden.

Wie aus den Figuren 3a bis 3c zu ersehen ist, ist jede Stelle (Punkt oder Bereich) der jeweiligen Oberfläche der jeweiligen Ausgangsplatten 3 und 4 in Verfahrensschritt c) benachbart zu mindestens einem Heizelement. Mit anderen Worten ausgedrückt befindet sich an jeder Stelle zwischen den beiden Ausgangsplatten mindestens ein Heizelement.

In Schritt d) wird das mindestens eine Heizelement vollständig aus dem Zwischenraum wieder entfernt. Erfindungsgemäß kann das Entfernen des Heizelements sowohl in die gleiche Richtung wie das Einführen des Heizelements in Schritt b) erfolgen, als auch in entgegengesetzter Richtung.

Erfindungsgemäß bevorzugt wird das Heizelement in der gleichen Richtung entfernt, wie es eingeführt wurde, wenn genau ein Heizelement verwendet wurde. Erfindungsgemäß ebenfalls bevorzugt, werden die Heizelemente in gleicher Richtung entfernt wie eingeführt, wenn mehrere Heizelemente auf zueinander parallelen Ebenen verwendet werden. Erfindungsgemäß ebenfalls bevorzugt, werden die Heizelemente in entgegengesetzter Richtung zur Einführrichtung entfernt, wenn zwei Heizelemente verwendet werden, die in einer Ebene eingeführt werden.

Weiterhin ist es erfindungsgemäß bevorzugt, dass genau zwei Heizelemente verwendet werden und diese in Schritt b) aus jeweils zueinander entgegengesetzten Richtungen in den Zwischenraum der beiden dünneren thermoplastischen Schaumstoffplatten eingeführt werden und/oder die beiden Heizelemente in Schritt d) in jeweils zueinander entgegengesetzten Richtungen aus dem Zwischenraum der beiden dünneren thermoplastischen Schaumstoffplatten wieder entfernt werden.

In Schritt e) wird mindestens eine der beiden dünneren thermoplastischen Schaumstoffplatten gegen die Oberfläche der jeweiligen anderen dünneren thermoplastischen Schaumstoffplatte gedrückt.

Prinzipiell ist es denkbar, dass beide Ausgangsplatten in Schritt e) gegeneinander gedrückt werden, also so lange aufeinander zubewegt werden, bis der Abstand (a) gleich null ist. Vorzugsweise wird erfindungsgemäß aber nur eine der beiden Ausgangsplatten gegen die jeweils andere Ausgangsplatte gedrückt. Bei einer, bezogen auf die Räumlichkeit, horizontalen Anordnung der Ausgangsplatten, wie in den Figuren 1 bis 3 dargestellt, ist es bevorzugt, dass, die räumlich gesehen, obere Ausgangsplatte gegen die untere Ausgangsplatte gedrückt wird. Dies erfolgt vorzugsweise unter Verwendung einer entsprechenden Greifvorrichtung, mit der die Ausgangsplatten sowohl angehoben, als auch unter Anwendung von Druck gegen die unteren Platten verschoben werden können. Die unteren Ausgangsplatten können auf einer Senkvorrichtung aufliegen, die bei der Herstellung von höherlagigen thermoplastischen Schaumstoffplatten entsprechend nach unten bewegt werden kann. Diese Vorrichtung kann gegebenenfalls auch so ausgestattet sein, dass sie auch zum Andrücken der unteren Ausgangsplatte in Richtung der oberen Ausgangsplatte eingesetzt werden kann. Vorzugsweise wird diese Vorrichtung aber während der Durchführung der erfindungsgemäßen Schritte a) bis e) nicht bewegt. Ein Absenken dieser Vorrichtung erfolgt erst vor der Wiederholung der Schritte a) bis e), um eine drei- oder höherlagige thermoplastische Schaumstoffplatte herzustellen.

Weiterhin ist es bevorzugt, dass im erfindungsgemäßen Verfahren im Rahmen von Schritt e) ein Verpressen der thermisch zu verschweißenden zusammengefügten dünneren thermoplastischen Schaumstoffplatten durchgeführt wird. Das Verpressen erfolgt im Allgemeinen im Sekunden- bis Minutenbereich und/oder bei einem Pressdruck von 0,01 bis 0,5 bar, vorzugsweise von 0,1 bis 0,5 bar.

Erfindungsgemäß wird mindestens während der Schritte b), c) und d) warme Luft zwischen die beiden dünneren thermoplastischen Schaumstoffplatten geleitet. Zur Einleitung der warmen Luft sind prinzipiell alle bekannten Methoden geeignet.

Erfindungsgemäß bevorzugt wird die warme Luft definiert zwischen die beiden dünneren thermoplastischen Schaumstoffplatten eingeleitet. "definiert" bedeutet im Rahmen der vorliegenden Erfindung, dass sowohl die Menge als auch die Temperatur der warmen Luft beim Einleiten kontrolliert wird. Erfindungsgemäß liegt die Temperatur der warmen Luft zwischen 50 und 250 °C, bevorzugt zwischen 60 und 150 °C.

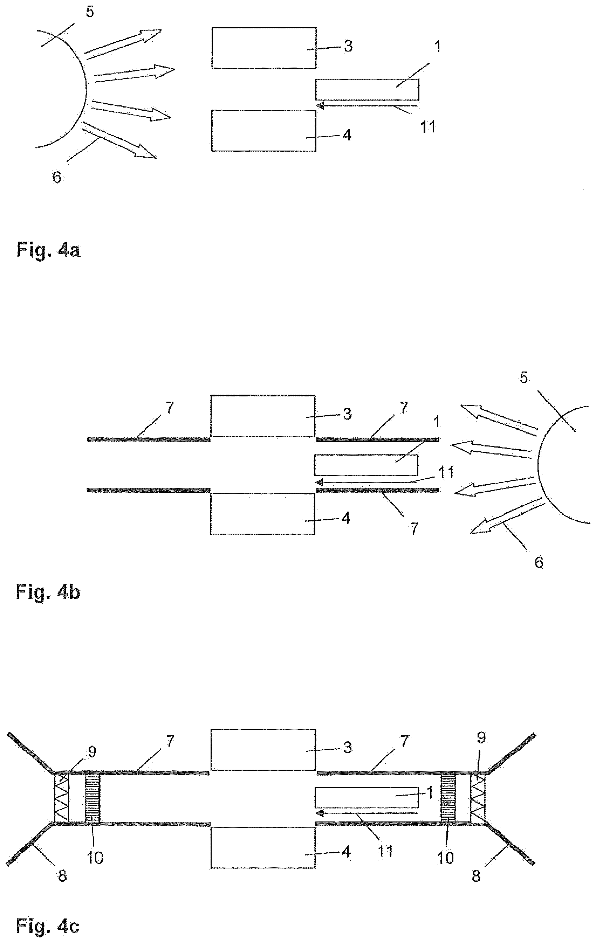

Erfindungsgemäß kann zur definierten Einleitung von warmer Luft beispielsweise mindestens eine der Maßnahmen ausgewählt aus Heißluftgebläse, Luftleitung, Druckausgleichsgefäß, Luftspeicher und/oder Thermostatsteuerung verwendet werden. Figur 4 zeigt beispielhaft drei mögliche Ausführungsformen dieser Maßnahmen. Die in Figur 4 gezeigten Ausführungsformen sind lediglich beispielhaft zu verstehen. Erfindungsgemäß sind auch nicht dargestellte Ausführungsformen möglich.

Beispielsweise können Heißluftgebläse so um die miteinander zu verschweißenden dünneren thermoplastischen Schaumstoffplatten angeordnet werden, dass die durch das Heißluftgebläse erzeugte warme Luft zwischen die beiden dünneren thermoplastischen Schaumstoffplatten strömt (vergleiche Figur 4a).

Es ist außerdem möglich, Einrichtungen zur Luftleitung zu installieren. Diese Einrichtungen werden im Folgenden auch als Luftführungen bezeichnet. Geeignete Einrichtungen sind beispielsweise Rohrleitungen, Schläuche oder Kanalleitungen. Diese können in allen bekannten Formen vorliegen, also beispielsweise eckig oder rund sowie starr oder flexibel. Diese Luftführungen können um die beiden dünneren thermoplastischen Schaumstoffplatten verlegt werden, um die Luft zu leiten. Die Luftführungen können so verlegt sein, dass das Heizelement in der Luftführung bewegt wird oder dass die Luftführung ober- bzw. unterhalb des Heizelements verläuft oder daneben.

Es ist außerdem möglich, dass die Luftführung an beiden Seiten des Zwischenraums zwischen den beiden dünneren thermoplastischen Schaumstoffplatten verläuft (erfindungsgemäß als "symmetrisch" bezeichnet) oder nur an einer Seite des Zwischenraums zwischen den beiden dünneren thermoplastischen Schaumstoffplatten.

An den Seiten der Luftführungen, die nicht an die dünneren thermoplastischen Schaumstoffplatten grenzen, kann beispielsweise ein Heißluftgebläse installiert werden, das warme Luft in die Luftführung bläst und diese Luftführung die warme Luft weiter in den Zwischenraum zwischen den beiden thermoplastischen Schaumstoffplatten leiten (vergleiche Figur 4b). In einer symmetrischen Anordnung der Luftführung ist es sowohl möglich, das Heißluftgebläse nur an einer der beiden Luftführungen zu installieren als auch es an beide Luftführungen jeweils an der Seite, die von den dünneren thermoplastischen Schaumstoffplatten abgewandt ist, zu installieren.

Ein drittes Beispiel für die definierte Einleitung warmer Luft zwischen die dünneren thermoplastischen Schaumstoffplatten zeigt Figur 4c. Auf Höhe des Zwischenraums zwischen den beiden dünneren thermoplastischen Schaumstoffplatten können Luftführungen installiert werden, wobei die Luftführung eine Ansaugdüse enthalten kann, die sowohl an der den dünneren thermoplastischen Schaumstoffplatten abgewandten Seite als auch an der zugewandten Seite installiert sein kann, und die im Falle einer symmetrischen Anordnung der Luftführung sowohl auf beiden Seiten der dünneren thermoplastischen Schaumstoffplatten vorhanden sein kann als auch nur auf einer Seite der dünneren thermoplastischen Schaumstoffplatten. Gegebenenfalls kann zwischen der Ansaugdüse und der Luftführung ein Druckausgleichsgefäß und/oder ein Thermostat zur Temperatursteuerung installiert sein.

Es ist weiterhin möglich, Luftleitungen an beiden Seiten des Zwischenraums zwischen den beiden dünneren thermoplastischen Schaumstoffplatten zu installieren, wobei die Luftleitungen miteinander verbunden sind. Dann kann auf der einen Seite des Zwischenraums zwischen den beiden dünneren thermoplastischen Schaumstoffplatten warme Luft zwischen die Ausgangsplatten geleitet werden und auf der anderen Seite des Zwischenraums zwischen den beiden dünneren thermoplastischen Schaumstoffplatten diese warme Luft abgesaugt werden. Die abgesaugte warme Luft kann dann auf die erste Seite zurückgeführt werden. Diese Ausführungsform ist besonders vorteilhaft, da durch die Rückführung der warmen Luft Energie gespart werden kann.

Sämtliche Maßnahmen, um die Menge und Temperatur der eingeleiteten Luft zu kontrollieren, können in beliebiger Richtung relativ zu der Ebene des Zwischenraums zwischen den beiden dünneren thermoplastischen Schaumstoffplatten installiert werden. Bevorzugt werden sie entlang der Einführrichtung des Heizelements oder senkrecht dazu in der Ebene des Zwischenraums zwischen den beiden dünneren thermoplastischen Schaumstoffplatten installiert. Erfindungsgemäß besonders bevorzugt ist die Installation entlang der Einführrichtung des Heizelements. Erfindungsgemäß weiterhin besonders bevorzugt ist die Installation senkrecht zu der Einführrichtung des Heizelements.

Das erfindungsgemäße Verfahren kann sowohl in horizontaler als auch in vertikaler Ausrichtung der Heizelemente durchgeführt werden. Bevorzugt ist die in den Figuren 1 bis 4 dargestellte horizontale Ausführungsform (jeweils bezogen auf die Räumlichkeit). Weiterhin bevorzugt ist die senkrechte Ausführungsform, bezogen auf die Räumlichkeit.

Erfindungsgemäß ist es bevorzugt, dass das Heizelement in den Schritten b) und d) mit einer Geschwindigkeit von 0,1 bis 5 m/s, vorzugsweise von 0,3 bis 3 m/s bewegt wird.

In einer weiteren bevorzugten Ausführungsform der vorliegenden Erfindung wird das mindestens eine Heizelement parallel zur x/y-Ebene und entlang der y-Richtung (Breite) der zwei dünneren thermoplastischen Schaumstoffplatten bewegt.

Weiterhin ist bevorzugt, das mindestens eine Heizelement nach dem Einfahren zwischen die Schaumstoffplatten kurz zu stoppen, um eine besonders gleichmäßige Erwärmung der Schaumstoffplatten sicherzustellen. In dieser Ausführungsform beträgt die Breite des mindestens einen Heizelements in Bewegungsrichtung (y-Richtung) bevorzugt 100 bis 110% der Breite der dünneren thermoplastischen Schaumstoffplatten. In einer erfindungsgemäßen Ausführungsform beträgt die Zeit, die das Heizelement stoppt, höchstens 30 % der Umstellzeit, bevorzugt höchstens 20 % der Umstellzeit, besonders bevorzugt höchstens 10 % der Umstellzeit.

Weiterhin ist es erfindungsgemäß bevorzugt, dass in den Schritten b) bis d) der Abstand zwischen der Oberfläche jeweils einer der beiden dünneren thermoplastischen Schaumstoffplatten und der Oberfläche des ihr jeweils räumlich am nächsten kommenden Heizelementes 0,5 bis 25 mm, bevorzugt 1 bis 10 mm, beträgt.

Weiterhin ist es bevorzugt, dass im erfindungsgemäßen Verfahren die Umstellzeit kurzgehalten wird. Dies bedeutet, dass die Gesamtdauer der Schritte b) bis e) maximal 20 Sekunden, vorzugsweise maximal 10 Sekunden, insbesondere maximal 5 Sekunden beträgt.

Weiterhin ist es bevorzugt, dass das erfindungsgemäße Verfahren in einer thermisch isolierten Einhausung durchgeführt wird und eine um +/- 10 °C konstante Temperatur im Bereich von 40 bis 200 °C, bevorzugt von 50 bis 100 °C, in der thermischen Einhausung aufrechterhalten wird.

Vorzugsweise werden die erfindungsgemäßen thermoplastischen Schaumstoffplatten aus zumindest teilweise schäumhautfreien Ausgangsplatten hergestellt, das heißt beim thermischen Verschweißen sind pro zu verschweißendem Plattenpaar mindestens eine, vorzugsweise beide, thermisch zu verschweißenden Oberflächen der dünneren thermoplastischen Schaumstoffplatten (Ausgangsplatten) schäumhautfrei. Unter den Begriff "schäumhautfrei" wird im Rahmen der vorliegenden Erfindung verstanden, dass die beim Herstellungsprozess der jeweiligen thermoplastischen Schaumstoffplatte entstandene Schäumhaut beispielsweise durch Hobeln oder Fräsen wieder entfernt wird. Der Vollständigkeit halber wird darauf hingewiesen, dass bei Verwendung eines Extrusionsschaumstoffes die entsprechende Oberfläche auch als extrusionshautfrei anstelle von schäumhautfrei bezeichnet wird.

Weiterhin ist es im Rahmen der vorliegenden Erfindung bevorzugt, dass auf Temperaturen oberhalb der Glasübergangstemperatur und/oder Schmelztemperatur der thermoplastischen Schaumstoffplatte erhitzt wird. Vorzugsweise wird das thermische Verschweißen bei Temperaturen von 50 bis 300 °C oberhalb der Glasübergangstemperatur bei amorphen thermoplastischen Schaumstoffen oder von 50 bis 200 °C oberhalb der Schmelztemperatur bei teilkristallinen thermoplastischen Schaumstoffen durchgeführt.

Die mit dem erfindungsgemäßen Verfahren hergestellten thermoplastischen Schaumstoffplatten können zusätzliche Stoffe/Verbindungen mit speziellen Verwendungseigenschaften, beispielsweise Flammschutzmittel oder Absorber von elektromagnetischer Strahlung, enthalten. Erfindungsgemäß werden solche zusätzlichen Stoffe vor dem thermischen Verschweißen auf mindestens eine Oberfläche der thermisch zu verschweißenden Ausgangsplatten aufgetragen, vorzugsweise werden diese Stoffe pro zu verschweißendem Plattenpaar auf beide Oberflächen der Ausgangsplatten aufgetragen.

In einer Ausführungsform der vorliegenden Erfindung enthalten die mit dem erfindungsgemäßen Verfahren hergestellten thermoplastischen Schaumstoffplatten mindestens ein Flammschutzmittel. Flammschutzmittel als solche sind dem Fachmann bekannt. Bevorzugte Flammschutzmittel im Rahmen der vorliegenden Erfindung sind ausgewählt aus einem Phosphat, einem Phosphit, einem Phosphonat, einem Polyphosphonat, Melamin, einem Metalloxidhydrat, insbesondere einem Aluminiumoxidhydrat oder einer halogenierten organischen Verbindung. Die vorgenannten Flammschutzmittel, vorzugsweise die phosphorhaltigen Flammschutzmittel, aber nicht die halogenierten organischen Verbindungen, werden vorzugsweise vor dem thermischen Verschweißen direkt auf mindestens eine Oberfläche (pro Plattenpaar) der zu verschweißenden Ausgangsplatten aufgetragen.

Bevorzugte Phosphate und Phosphonate sind ausgewählt aus DMMP (Dimethymethylphosphonat), DMPP (Dimethylpropylphosphonat), TCEP (Tris(chlorethyl)phosphat), TCPP (Tris(chlorpropyl)phosphat), TDCPP (Tris(dichlor-isopropyl)phosphat), TPP (Triphenylphosphat), TEHP (Tris-(2-ethylhexyl)phosphat), TKP (Trikresylphosphat) oder TCEP (Trichlorpropylphosphat).

Bevorzugte halogenierte organische Verbindungen sind bromhaltige organische Verbindungen, besonders bevorzugt sind HBCD (Hexabromcyclododekan) oder bromierte Polystyrole. Bromierte Polystyrole sind kommerziell erhältlich, beispielsweise von Emerald, Fa. Great Lakes. Sie werden vorzugsweise in Mengen von 0,5 bis 5 Gew.-% (bezogen auf die Ausgangsplatte) eingesetzt. Sofern halogenierte organische Verbindungen als Flammschutzmittel eingesetzt werden, erfolgt dies vorzugsweise bereits während des Herstellungsprozesses der Ausgangsplatten, das heißt, das Flammschutzmittel ist gleichmäßig über die gesamte Dicke der jeweiligen Ausgangsplatte verteilt.

Ein besonders bevorzugtes Flammschutzmittel ist Dimethylpropylphosphonat (DMPP), das beispielsweise kommerziell erhältlich ist unter der Bezeichnung Levagard DMPP von der Firma Lanxess. In einer Ausführungsform der vorliegenden Erfindung ist Blähgraphit bevorzugt, der ebenfalls als Absorber verwendet werden kann.

Sofern erfindungsgemäß ein Flammschutzmittel verwendet wird, ist es bevorzugt, dass das thermische Verschweißen in Gegenwart von mindestens einem Flammschutzmittel durchgeführt wird und dass pro zu verschweißendem Plattenpaar auf mindestens eine, vorzugsweise auf beide thermisch zu verschweißenden Oberflächen der dünneren thermoplastischen Schaumstoffplatten das Flammschutzmittel in Mengen von mehr als 5 g/m² aufgetragen wird. Vorzugsweise wird auf beide thermisch zu verschweißenden Oberflächen das Flammschutzmittel in Mengen von mehr als 10 g/m², insbesondere von mehr als 15 g/m², aufgetragen.

In einer bevorzugten Ausführungsform der vorliegenden Erfindung wird das thermische Verschweißen in Gegenwart von mindestens zwei Flammschutzmitteln durchgeführt, wobei 0,5 bis 5 Gew.-% von mindestens einer halogenierten organischen Verbindung während der Herstellung der Ausgangsplatten in diese eingebracht werden. Vor dem thermischen Verschweißen wird mindestens ein weiteres Flammschutzmittel, vorzugsweise ein phosphorhaltiges Flammschutzmittel, auf pro Plattenpaar mindestens eine thermisch zu verschweißende Oberfläche der Ausgangsplatten aufgetragen, vorzugsweise in Mengen von mehr als 10 g/m². Das weitere Flammschutzmittel ist somit nach dem Verschweißungsvorgang größtenteils (also zu mehr als 90 %) in der Nähe der Schweißnaht der thermoplastischen Schaumstoffplatte angeordnet.

Weiterhin können die mit dem erfindungsgemäßen Verfahren hergestellten thermoplastischen Schaumstoffplatten mindestens einen Absorber von elektromagnetischer Strahlung (im nachfolgenden Text auch als "Absorber" bezeichnet) enthalten. Vorzugsweise wird der Absorber von elektromagnetischer Strahlung als Dispersion eingesetzt, insbesondere als wässrige Dispersion. Das Auftragen auf die Plattenoberfläche kann beispielsweise durch Pinseln, Rakeln, Walzen, Sprühen oder Drucken erfolgen.

Die Menge an Absorber (fest) auf einer Oberfläche beträgt normalerweise 0,01g/m² bis 100 g/m², bevorzugt 0,1g/m² bis 50 g/m², besonders bevorzugt 1 g/m² bis 20 g/m². Die Absorber können einseitig oder beidseitig aufgetragen werden.

Absorber von elektromagnetischer Strahlung als solche sind dem Fachmann bekannt. Geeignete Suszeptoren für Radiofrequenz Strahlung sind in WO 2006/050013, WO 99/47621 und WO 012/1725 beschrieben. Bevorzugte Suszeptoren sind polymere lonomere.

Absorber von anderen Strahlungsarten sind beispielsweise in WO 2009/071499 auf den Seiten 9 bis 11 beschrieben. Vorzugsweise wird im Rahmen der vorliegenden Erfindung der Absorber von elektromagnetischer Strahlung in Abhängigkeit von der zum thermischen Verschweißen verwendeten elektromagnetischen Strahlung ausgewählt. Erfolgt beispielsweise das thermische Verschweißen unter Verwendung von Mikrowellenstrahlen, wird vorzugsweise ein Absorber von elektromagnetischer Strahlung ausgewählt, der über eine gute Absorptionsfähigkeit im Wellenlängenbereich von Mikrowellen verfügt.

Geeignete Absorber sind beispielsweise organische IR-Absorber, organische Mikrowellen-Absorber, anorganische IR-Absorber oder anorganische Mikrowellenabsorber.

Unter IR-Absorber ist im Rahmen dieser Anmeldung eine Verbindung zu verstehen, die aufgebracht in einer Schichtdicke von < 50 µm bei mindestens einer Wellenlänge von Strahlung des Wellenlängenbereichs von 700 nm bis 1000 µm eine Absorption ≥90 % zeigt. Bevorzugt ist der Wellenlängenbereich von >700 nm bis 20 µm, sowie die Wellenlängen 9,6 µm und 10,6 µm.

Unter Mikrowellenabsorber ist im Rahmen dieser Anmeldung eine Verbindung zu verstehen, die Mikrowellen des Wellenlängenbereichs von > 1 mm bis 1 m absorbiert. Besonders bevorzugt werden die technisch relevanten Frequenzen von 2,45 Ghz, 433-444 MHz und 902-928 MHz.

Vorzugsweise ist der Absorber von elektromagnetischer Strahlung ein Infrarot (IR)-Absorber und/oder Mikrowellenabsorber, insbesondere Graphit oder Ruß. Weiterhin ist es bevorzugt, dass die elektromagnetische Strahlung IR-Strahlen und/oder Mikrowellenstrahlen sind.

Gegebenenfalls kann im erfindungsgemäßen Verfahren ein Trocknungsschritt durchgeführt werden, beispielsweise nachdem ein Absorber von elektromagnetischer Strahlung auf die Oberfläche der dünneren thermoplastischen Schaumstoffplatten aufgetragen wurde. Das Trocknen findet normalerweise für eine Dauer von 10 Minuten bis 2 Stunden und/oder bei einer Temperatur im Bereich von 50 bis 100 °C statt.

Wie vorstehend bereits erwähnt, können außer dem Flammschutzmittel und/oder dem Absorber von elektromagnetischer Strahlung auch weitere Stoffe mit anderen Verwendungseigenschaften auf die zu verschweißende Oberfläche der entsprechenden dünneren thermoplastischen Schaumstoffplatten aufgetragen werden. Geeignete weitere Stoffe können beispielsweise Bindemittel, pH-Regulatoren sowie gegebenenfalls Lösungsmittel sein. Bindemittel, pH-Regulatoren sowie Lösungsmittel als solche sind dem Fachmann bekannt.

In einer Ausführungsform der vorliegenden Erfindung wird auf mindestens einer Oberfläche von mindestens einer dünneren thermoplastischen Schaumstoffplatte ein Gemisch aufgetragen, das i) mindestens einen Absorber von elektromagnetischer Strahlung, ii) mindestens ein Bindemittel und/oder iii) mindestens ein Flammschutzmittel enthält.

Geeignete Bindemittel im Rahmen der vorliegenden Erfindung sind ausgewählt aus Polyacrylaten und Copolymeren davon, Polystyrol und Copolymeren davon, Ethylen/Acrylat-Copolymeren, Ethylen/Vinylacetat-Copolymeren, Polyurethanen und Polyurethan/Acrylat-Hybriden. Bevorzugte Copolymere von Polystyrol sind Styrol/Butadien-Copolymere.

Bevorzugte Bindemittel sind ausgewählt aus wässrigen Dispersionen oder Lösungen von Polyacrylaten und Copolymeren davon, Polystyrol und Copolymeren davon, Ethylen/Acrylat-Copolymeren, Ethylen/Vinylacetat-Copolymeren, Polyurethanen und Polyurethan/Acrylat-Hybriden. Bevorzugte Copolymere von Polystyrol sind Styrol/Butadien-Copolymere.

Als Bindemittel besonders bevorzugt sind Dispersionen mit hohem Anteil an Polystyrol oder Copolymer davon, insbesondere mit einem hohen Anteil an Polystyrol. Diese Dispersionen werden vorzugsweise verwendet, wenn im erfindungsgemäßen Verfahren die dünneren thermoplastischen Schaumstoffplatten (Ausgangsplatten) ebenfalls Polystyrol oder Copolymere davon enthalten, weil dann die Eigenschaften der zumindest zweilagigen thermoplastischen Schaumstoffplatten (Verbundplatten) aufgrund der Verwendung des besagten Bindemittels noch weniger von den Ausgangsplatten abweichen.

### Bezugszeichenliste

- a: Abstand zwischen den dünneren thermoplastischen Schaumstoffplatten
- b: Dicke Heizelement
- e: Breite Heizelement
- x: Länge der dünneren thermoplastischen Schaumstoffplatten
- y: Breite der dünneren thermoplastischen Schaumstoffplatten
- z: Dicke der dünneren thermoplastischen Schaumstoffplatten

- 1: Heizelement
- 2: Heizelement
- 3: dünnere thermoplastische Schaumstoffplatte
- 4: dünnere thermoplastische Schaumstoffplatte
- 5: Heißluftgebläse
- 6: warme Luft
- 7: Luftführung
- 8: Ansaugdüse
- 9: Druckausgleichsgefäß
- 10: Thermostat
- 11: Einführrichtung des Heizelements

## Patentansprüche

1. Verfahren zur Herstellung einer zumindest zweilagigen thermoplastischen Schaumstoffplatte durch thermisches Verschweißen von mindestens zwei dünneren thermoplastischen Schaumstoffplatten, umfassend die folgenden Schritte a) bis e):
a) zwei dünne thermoplastische Schaumstoffplatten (3, 4) werden in einem Abstand (a) parallel zueinander ausgerichtet, so dass sie einen Zwischenraum ausbilden,
b) in den Zwischenraum wird mindestens ein Heizelement (1, 2) parallel zu den beiden dünneren thermoplastischen Schaumstoffplatten eingeführt, wobei sich die Oberflächen der beiden dünneren thermoplastischen Schaumstoffplatten und das Heizelement nicht gegenseitig berühren,
c) das Heizelement wird so weit zwischen die beiden dünneren thermoplastischen Schaumstoffplatten eingeführt, bis zwischen den beiden dünneren thermoplastischen Schaumstoffplatten bezogen auf jede Stelle der jeweiligen Oberfläche der beiden dünneren thermoplastischen Schaumstoffplatten zumindest zeitweise sich das Heizelement befunden hat,
d) das Heizelement wird wieder vollständig aus dem Zwischenraum entfernt,
e) mindestens eine der beiden dünneren thermoplastischen Schaumstoffplatten wird gegen die Oberfläche der jeweiligen anderen dünneren thermoplastischen Schaumstoffplatte gedrückt, **dadurch gekennzeichnet, dass** während den Schritten b), c) und d) warme Luft (6) zwischen die beiden dünneren thermoplastischen Schaumstoffplatten geleitet wird.

2. Verfahren gemäß Anspruch 1, **dadurch gekennzeichnet, dass** zur Einleitung warmer Luft zwischen die beiden dünneren thermoplastischen Schaumstoffplatten mindestens eine der Maßnahmen ausgewählt aus Heißluftgebläse, Luftleitung, Druckausgleichsgefäß, Luftspeicher und/oder Thermostatsteuerung verwendet wird.

3. Verfahren gemäß Anspruch 1 oder 2, **dadurch gekennzeichnet, dass** die in den Schritten b), c) und d) zwischen die beiden dünneren thermoplastischen Schaumstoffplatten geleitete warme Luft eine Temperatur zwischen 50 und 250 °C, bevorzugt zwischen 60 und 150 °C, aufweist.

4. Verfahren gemäß einem der Ansprüche 1 bis 3, **dadurch gekennzeichnet, dass** die durch das thermische Verschweißen gebildete Schweißnaht eine Dicke von 30 bis 200 µm aufweist, vorzugsweise von 50 bis 150 µm, mehr bevorzugt von 70 bis 130 µm, insbesondere von 80 bis 100 µm.

5. Verfahren gemäß einem der Ansprüche 1 bis 4, **dadurch gekennzeichnet, dass** die dünnere thermoplastische Schaumstoffplatte ein Partikelschaumstoff oder ein Extrusionsschaumstoff ist, vorzugsweise ein Extrusionsschaumstoff aus Polysulfon (PSU), Polyethersulfon (PESU), Polyphenylsulfon (PPSU), Polyethylenterephthalat (PET), Polystyrol oder aus einem aus Styrol hergestellten Copolymer, besonders bevorzugt ein Extrusionsschaumstoff aus Polystyrol oder aus einem aus Styrol hergestellten Copolymer.

6. Verfahren gemäß einem der Ansprüche 1 bis 5, **dadurch gekennzeichnet, dass** pro zu verschweißendem Plattenpaar mindestens eine, vorzugsweise beide thermisch zu verschweißenden Oberflächen der dünneren thermoplastischen Schaumstoffplatten schäumhautfrei sind.

7. Verfahren gemäß einem der Ansprüche 1 bis 6, **dadurch gekennzeichnet, dass** das thermische Verschweißen bei Temperaturen von 50 bis 300 °C oberhalb der Glasübergangstemperatur bei amorphen thermoplastischen Schaumstoffen oder von 50 bis 200 °C oberhalb der Schmelztemperatur bei teilkristallinen thermoplastischen Schaumstoffen durchgeführt wird.

8. Verfahren gemäß einem der Ansprüche 1 bis 7, **dadurch gekennzeichnet, dass** das mindestens eine Heizelement eine Heizplatte ist und/oder zwei Heizelemente verwendet werden.

9. Verfahren gemäß einem der Ansprüche 1 bis 8, **dadurch gekennzeichnet, dass** zwei Heizelemente verwendet werden und in Schritt b) diese zwei Heizelemente aus jeweils zueinander entgegengesetzten Richtungen in den Zwischenraum eingeführt werden und/oder die zwei Heizelemente in Schritt d) in jeweils zueinander entgegengesetzten Richtungen aus dem Zwischenraum wieder entfernt werden.

10. Verfahren gemäß einem der Ansprüche 1 bis 9, **dadurch gekennzeichnet, dass** zwei Heizelemente verwendet werden, die in Schritt b) auf parallel zueinander versetzten Ebenen parallel zu den beiden dünneren thermoplastischen Schaumstoffplatten eingeführt werden.

11. Verfahren gemäß einem der Ansprüche 1 bis 10, **dadurch gekennzeichnet, dass** das Heizelement in den Schritten b) und d) mit einer Geschwindigkeit von 0,1 bis 5 m/s bewegt wird.

12. Verfahren gemäß einem der Ansprüche 1 bis 11, **dadurch gekennzeichnet, dass** die zwei dünneren thermoplastischen Schaumstoffplatten in Schritt a) jeweils eine Länge (x-Richtung) von 500 bis 2800 mm, eine Breite (y-Richtung) von 500 bis 1250 mm und eine Dicke (z-Richtung) von 20 bis 200 mm aufweisen.

13. Verfahren gemäß einem der Ansprüche 1 bis 12, **dadurch gekennzeichnet, dass** das Heizelement parallel zur x-/y-Ebene liegt und entlang der y-Richtung (Breite) der zwei dünneren thermoplastischen Schaumstoffplatten bewegt wird.

14. Verfahren gemäß einem der Ansprüche 1 bis 13, **dadurch gekennzeichnet, dass** in den Schritten b) bis d) der Abstand der Oberfläche jeweils einer der beiden dünneren thermoplastischen Schaumstoffplatten und der Oberfläche des Heizelements 0,5 bis 25 mm beträgt.

15. Verfahren gemäß einem der Ansprüche 1 bis 14, **dadurch gekennzeichnet, dass** das Verfahren in einer thermisch isolierten Einhausung durchgeführt wird und eine um +/- 10°C konstante Temperatur im Bereich von 40 bis 200 °C bevorzugt von 50 bis 100°C, in der thermischen Einhausung aufrechterhalten wird.

## Claims

1. A process for the production of an at least two-layer thermoplastic foam sheet via thermal welding of at least two thinner thermoplastic foam sheets, comprising the following steps a) to e):
a) two thinner thermoplastic foam sheets (3, 4) are oriented parallel to one another with a separation (a), in such a way that they form an intermediate space,
b) at least one heating element (1, 2) is introduced parallel to the two thinner thermoplastic foam sheets, into the intermediate space, and the surfaces of the two thinner thermoplastic foam sheets here do not touch the heating element,
c) the heating element is introduced between the two thinner thermoplastic foam sheets to an extent such that, in relation to every location on the respective surface of the two thinner thermoplastic foam sheets, the heating element has been present at least temporarily between the two thinner thermoplastic foam sheets,
d) the heating element is in turn removed completely from the intermediate space,
e) at least one of the two thinner thermoplastic foam sheets is forced against the surface of the respective other thinner thermoplastic foam sheet,
wherein,
during the steps b), c) and d), warm air (6) is passed between the two thinner thermoplastic foam sheets.

2. The process according to claim 1, wherein, for the introduction of warm air between the two thinner thermoplastic foam sheets, at least one means is used selected from hot-air blower, air line, pressure-equalization vessel, air reservoir and/or thermostatic control.

3. The process according to claim 1 or 2, wherein the temperature of the warm air passed between the two thinner thermoplastic foam sheets in the steps b), c) and d) is from 50 to 250°C, preferably from 60 to 150°C.

4. The process according to any of claims 1 to 3, wherein the thickness of the weld formed via the thermal welding process is from 30 to 200 µm, preferably from 50 to 150 µm, more preferably from 70 to 130 µm, in particular from 80 to 100 µm.

5. The process according to any of claims 1 to 4, wherein the thinner thermoplastic foam sheet is a molded foam or an extruded foam, preferably an extruded foam made of polysulfone (PSU), polyether sulfone (PESU), polyphenyl sulfone (PPSU), polyethylene terephthalate (PET), polystyrene or made of a copolymer produced from styrene, particularly preferably an extruded foam made of polystyrene or made of a copolymer produced from styrene.

6. The process according to any of claims 1 to 5, wherein, in each sheet pair to be welded, at least one and preferably both of the surfaces to be thermally welded of the thinner thermoplastic foam sheets are foaming-skin-free.

7. The process according to any of claims 1 to 6, wherein the thermal welding process is carried out at temperatures which are from 50 to 300°C above the glass transition temperature in the case of amorphous thermoplastic foams, or which are from 50 to 200°C above the melting point in the case of semicrystalline thermoplastic foams.

8. The process according to any of claims 1 to 7, wherein the at least one heating element is a heating plate, and/or two heating elements are used.

9. The process according to any of claims 1 to 8, wherein two heating elements are used and, in step b), these two heating elements are introduced from, in each case, mutually opposite directions into the intermediate space and/or, in step d), the two heating elements are in turn removed in, in each case, mutually opposite directions from the intermediate space.

10. The process according to any of claims 1 to 9, wherein two heating elements are used which, in step b), are introduced on parallel-offset planes parallel to the two thinner thermoplastic foam sheets.

11. The process according to any of claims 1 to 10, wherein the heating element in the steps b) and d) is moved with a velocity of from 0.1 to 5 m/s.

12. The process according to any of claims 1 to 11, wherein, in step a), the length (x-direction) of the two thinner thermoplastic foam sheets is respectively from 500 to 2800 mm, and their width (y-direction) is from 500 to 1250 mm and their thickness (z-direction) is from 20 to 200 mm.

13. The process according to any of claims 1 to 12, wherein the heating element is parallel to the x-/y-plane and is moved along the y-direction (width) of the two thinner thermoplastic foam sheets.

14. The process according to any of claims 1 to 13, wherein, in the steps b) to d), the separation of the surface of each of the two thinner thermoplastic foam sheets and the surface of the heating element is from 0.5 to 25 mm.

15. The process according to any of claims 1 to 14, wherein the process is carried out in a thermally insulated enclosure, and a temperature that is constant within +/- 10°C is maintained in the range from 40 to 200°C, preferably from 50 to 100°C, in the thermal enclosure.

## Revendications

1. Procédé de fabrication d'une plaque de mousse thermoplastique au moins bicouche par soudage thermique d'au moins deux plaques de mousse thermoplastique plus minces, comprenant les étapes a) à e) suivantes :
a) deux plaques de mousse thermoplastique minces (3, 4) sont orientées parallèlement l'une à l'autre à une distance (a), de sorte qu'elles forment un espace intermédiaire,
b) au moins un élément chauffant (1, 2) est introduit dans l'espace intermédiaire parallèlement aux deux plaques de mousse thermoplastique plus minces, les surfaces des deux plaques de mousse thermoplastique plus minces et l'élément chauffant n'étant pas en contact mutuel,
c) l'élément chauffant est introduit entre les deux plaques de mousse thermoplastique plus minces jusqu'à ce que l'élément chauffant se soit trouvé au moins temporairement entre les deux plaques de mousse thermoplastique plus minces, par rapport à chaque emplacement de la surface respective des deux plaques de mousse thermoplastique plus minces,
d) l'élément chauffant est entièrement retiré de l'espace intermédiaire,
e) au moins une des deux plaques de mousse thermoplastique plus minces est pressée contre la surface de l'autre plaque de mousse thermoplastique plus mince respective,
**caractérisé en ce que** pendant les étapes b), c) et d), de l'air chaud (6) est guidé entre les deux plaques de mousse thermoplastique plus minces.

2. Procédé selon la revendication 1, **caractérisé en ce que** pour le guidage d'air chaud entre les deux plaques de mousse thermoplastique plus minces, au moins une des mesures choisies parmi un ventilateur à air chaud, une conduite d'air, un réservoir d'égalisation de pression, un accumulateur d'air et/ou une régulation par thermostat, est utilisée.

3. Procédé selon la revendication 1 ou 2, **caractérisé en ce que** l'air chaud guidé entre les deux plaques de mousse thermoplastique plus minces aux étapes b), c) et d) présente une température entre 50 et 250 °C, de préférence entre 60 et 150 °C.

4. Procédé selon l'une quelconque des revendications 1 à 3, **caractérisé en ce que** le joint de soudure formé par le soudage thermique a une épaisseur de 30 à 200 µm, de préférence de 50 à 150 µm, de manière davantage préférée de 70 à 130 µm, notamment de 80 à 100 µm.

5. Procédé selon l'une quelconque des revendications 1 à 4, **caractérisé en ce que** la plaque de mousse thermoplastique plus mince est une mousse particulaire ou une mousse extrudée, de préférence une mousse extrudée de plysulfone (PSU), polyéthersulfone (PESU), polyphénylsulfone (PPSU), poly(téréphtalate d'éthylène) (PET), polystyrène ou d'un copolymère préparé à partir de styrène, de préférance particulière une mousse extrudée de polystyrène ou d'un copolymère préparé à partir de styrène.

6. Procédé selon l'une quelconque des revendications 1 à 5, **caractérisé en ce que**, par paire de plaques à souder, au moins une, de préférence les deux surfaces à souder thermiquement des plaques de mousse thermoplastique plus minces sont exemptes de peau de mousse.

7. Procédé selon l'une quelconque des revendications 1 à 6, **caractérisé en ce que** le soudage thermique est réalisé à des températures de 50 à 300 °C au-dessus de la température de transition vitreuse pour les mousses thermoplastiques amorphes ou de 50 à 200 °C au-dessus de la température de fusion pour les mousses thermoplastiques partiellement cristallines.

8. Procédé selon l'une quelconque des revendications 1 à 7, **caractérisé en ce que** l'au moins un élément chauffant est une plaque chauffante et/ou deux éléments chauffants sont utilisés.

9. Procédé selon l'une quelconque des revendications 1 à 8, caractérisé en qu'on utilise deux éléments chauffants et ces deux éléments chauffants sont introduits dans l'espace intermédiaire à l'étape b) à partir de directions opposées l'une à l'autre et/ou les deux éléments chauffants sont retirés de l'espace intermédiaire à l'étape d) dans des directions opposées l'une à l'autre.

10. Procédé selon l'une quelconque des revendications 1 à 9, **caractérisé en ce que** deux éléments chauffants sont utilisés qui sont introduits à l'étape b) dans des plans parallèlement décalés l'un par rapport à l'autre, parallèlement aux deux plaques de mousse thermoplastique plus minces.

11. Procédé selon l'une quelconque des revendications 1 à 10, **caractérisé en ce que** l'élément chauffant est déplacé aux étapes b) et d) à une vitesse de 0,1 à 5 m/s.

12. Procédé selon l'une quelconque des revendications 1 à 11, **caractérisé en ce que** les deux plaques de mousse thermoplastique plus minces présentent chacune à l'étape a) une longueur (direction x) de 500 à 2 800 mm, une largeur (direction y) de 500 à 1 250 mm et une épaisseur (direction z) de 20 à 200 mm.

13. Procédé selon l'une quelconque des revendications 1 à 12, **caractérisé en ce que** l'élément chauffant est parallèle au plan x/y et est déplacé le long de la direction y (largeur) des deux plaques de mousse thermoplastique plus minces.

14. Procédé selon l'une quelconque des revendications 1 à 13, **caractérisé en ce qu'**aux étapes b) à d), l'écart de la surface de chacune des deux plaques de mousse thermoplastique plus minces à la surface de l'élément chauffant est de 0,5 à 25 mm.

15. Procédé selon l'une quelconque des revendications 1 à 14, **caractérisé en ce que** le procédé est réalisé dans une enceinte isolée thermiquement et une température constante à ± 10 °C dans la plage allant de 40 à 200 °C, de préférence de 50 à 100 °C, est maintenue dans l'enceinte thermique.
